# FASCICULE DE BREVET EUROPEEN

(11) **EP 4 514 188 B1**
(45) Date de publication et mention de la délivrance du brevet: **25.02.2026**
(21) Numéro de dépôt: 23721917.5
(22) Date de dépôt: 25.04.2023
(51) Int. Cl.: A47J 45/07

(54) **POIGNEE AMOVIBLE COMPORTANT UN VERROU MOBILE MUNI D'UN DISPOSITIF ANTI-RECUL**
ABNEHMBARER GRIFF MIT EINEM BEWEGLICHEN SCHLOSS MIT EINER VORRICHTUNG ZUR UMKEHRUNGSVERHINDERUNG
REMOVABLE HANDLE COMPRISING A MOVABLE LOCK PROVIDED WITH AN ANTI-REVERSE DEVICE

(30) Priorité: 25.04.2022 FR 2203816
(43) Date de publication de la demande: 05.03.2025
(73) Titulaire: SEB S.A., 69130 Ecully (FR)
(72) Inventeur: MONTGELARD, Michel, 69134 Ecully Cedex (FR)
(74) Mandataire: SEB Développement
(86) Numéro de dépôt international: PCT/EP2023/060754
(87) Numéro de publication internationale: WO 2023/208896

(56) Documents cités:
- EP-A1- 3 888 511
- WO-A1-2017/006039
- WO-A1-2017/006040
- US-B1- 6 694 868

## Description

### Domaine technique

La présente invention concerne une poignée amovible destinée à coopérer avec un récipient de cuisson, le récipient de cuisson tel une casserole, une poêle ou un fait-tout, ayant une paroi latérale qui est prolongée vers le haut par une portion recourbée vers l'extérieur.

### Etat de la technique

Il est connu du document EP3888511, une poignée amovible destinée à coopérer avec un récipient de cuisson ayant une paroi latérale qui est prolongée vers le haut par une portion recourbée vers l'extérieur comportant une extrémité libre. La poignée amovible s'étend selon une direction longitudinale et comprend un organe d'appui interne et un organe d'appui externe destiné à venir contre, respectivement, une surface intérieure et une surface extérieure de la paroi latérale, ainsi qu'un organe d'appui supérieur destinés à venir contre l'extrémité libre de la portion recourbée. La poignée amovible comprend un verrou mobile en translation entre une position ouverte et une position fermée. Le verrou comporte une paroi de blocage destinée à être éloignée de l'organe d'appui interne dans la position ouverte du verrou et destinée à générer une force sur l'extrémité libre dans la position fermée du verrou, sous l'action d'un moyen de mise en pression. Le verrou comporte un organe saillant et la poignée amovible comporte un organe en creux fixe et dans la position fermée, l'organe saillant et l'organe en creux sont engagés l'un dans l'autre pour empêcher le recul du verrou.

Un tel dispositif est efficace pour éviter le recul du verrou et garantir le maintien de la poignée amovible sur le récipient de cuisson.

Cependant, l'organe saillant peut rester bloquer dans l'organe en creux lorsque l'utilisateur veut faire passer le verrou de la position fermée à la position ouverte.

### Résumé de l'invention

La présente invention vise à remédier à ces inconvénients.

Le problème technique à la base de l'invention consiste à proposer une poignée amovible destinée à coopérer avec un récipient de cuisson présentant un fonctionnement sûr et ergonomique.

Un autre but de la présente invention est de proposer une poignée amovible qui présente une conception simple et qui soit économique à mettre en œuvre.

A cet effet, l'invention a pour objet une poignée amovible destinée à coopérer avec un récipient de cuisson ayant une paroi latérale qui est prolongée vers le haut par une portion recourbée vers l'extérieur comportant une extrémité libre, ladite poignée amovible s'étendant selon une direction longitudinale et comprenant un organe d'appui interne et un organe d'appui externe destiné à venir contre, respectivement, une surface intérieure et une surface extérieure de la paroi latérale, ainsi qu'un organe d'appui supérieur destinés à venir contre l'extrémité libre de la portion recourbée, ladite poignée amovible comprenant un verrou mobile en translation entre une position ouverte et une position fermée, le verrou comportant une paroi de blocage destinée à être éloignée de l'organe d'appui interne dans la position ouverte du verrou et destinée à générer une force sur l'extrémité libre dans la position fermée du verrou, sous l'action d'un moyen de mise en pression, le verrou comportant un organe saillant et ladite poignée amovible comportant un organe en creux fixe et dans la position fermée, l'organe saillant et l'organe en creux étant engagés l'un dans l'autre pour empêcher le recul du verrou, caractérisée en ce que l'organe saillant s'étend transversalement sous la paroi de blocage et en ce que l'organe saillant comporte une extrémité libre qui coopère avec l'organe en creux, l'extrémité libre de l'organe saillant étant mobile entre une position de blocage dans laquelle le verrou ne peut reculer et une position de déblocage dans laquelle le verrou peut reculer.

On comprend que le verrou est guidé dans la poignée amovible avec un jeu de fonctionnement dimensionné pour autoriser, lorsque le verrou arrive en position fermée, un déplacement de la paroi de blocage vers le bas sous l'action du moyen de mise en pression et en réaction à l'appui sur l'extrémité libre de la portion recourbée. L'organe saillant qui est agencé au plus près de la paroi de blocage, effectue le même déplacement pour passer de la position de déblocage à la position de blocage et se loger dans l'organe en creux. L'organe saillant effectue un déplacement inverse pour passer de la position de blocage à la position de déblocage lorsque le verrou quitte la position fermée pour passer en position ouverte.

Par l'organe saillant s'étend transversalement sous la paroi de blocage, on comprend que l'organe saillant s'étend sous la paroi de blocage vers le bas.

De manière avantageuse, le verrou est mobile selon une direction parallèle à la direction longitudinale.

Avantageusement, l'organe en creux présente une hauteur H inférieure à 0,5 millimètre.

Ainsi, l'organe saillant effectue un déplacement très court pour passer de la position de blocage à la position de déblocage lorsque le verrou quitte la position fermée pour passer en position ouverte. En conséquence, l'organe saillant ne peut pas rester bloqué dans l'organe en creux lorsque l'utilisateur fait passer le verrou de la position fermée à la position ouverte.

De manière avantageuse, l'organe en creux présente une hauteur H inférieure à 0,3 millimètre.

De préférence, l'organe saillant s'étend sous la paroi de blocage du verrou selon une direction d'extension, la direction d'extension et la paroi de blocage formant un angle θ compris entre 60° et 120° dans un plan vertical passant par la direction longitudinale.

Dans la position fermée, l'extrémité libre de la portion recourbée exerce sur la paroi de blocage en réaction à l'action du moyen de mise en pression une force orientée vers le bas selon une direction proche de la direction d'extension de l'organe saillant.

Avantageusement, la direction d'extension de l'organe saillant et la paroi de blocage du verrou forme un angle θ égal à 90° dans un plan vertical passant par la direction longitudinale.

De manière avantageuse, l'organe saillant prend la forme d'une patte qui s'étend le long de la direction d'extension et qui présente une section transversale à la direction d'extension rectangulaire. La section transversale rectangulaire est de préférence constante.

De préférence, l'organe en creux comporte au moins un logement de réception de l'extrémité libre de l'organe saillant.

Avantageusement, dans un plan vertical passant par la direction longitudinale, l'au moins un logement présente une forme en V munie d'une première face plane inclinée d'un angle β par rapport à la direction longitudinale, l'angle β étant inférieur à 25° et l'extrémité libre de l'organe saillant comporte une arête inférieure qui coopère avec la première face plane dans la position de blocage.

De manière avantageuse, l'arête inférieure peut être légèrement rayonnée avec un rayon inférieur à un millimètre.

Ainsi, avec un angle β très faible, l'organe saillant peut se désengager facilement de l'organe en creux par un déplacement très court lorsque le verrou quitte la position fermée pour passer en position ouverte.

De préférence, la première face plane et l'arête inférieure s'étendent perpendiculairement au plan vertical passant par la direction longitudinale.

Avantageusement, la première face plane s'étend perpendiculairement au plan vertical passant par la direction longitudinale sur une largeur LF et en ce que l'arête inférieure s'étend perpendiculairement au plan vertical passant par la direction longitudinale sur une largeur LA, LF et/ou LA étant supérieur à 5 millimètres.

Une telle disposition permet d'obtenir une construction robuste.

De préférence, l'organe en creux comporte une pluralité de logements de réception agencés le long de la direction longitudinale et qui présente un pas P entre deux logements successifs, le pas P étant inférieur à 1,5 millimètres.

Ainsi, en fonction de la position du verrou liée à l'épaisseur et à la longueur de l'extrémité libre de la portion recourbée de la paroi verticale lors du passage en position fermée, l'organe saillant se logera dans un des logements de réception pour passer en position de blocage.

Avantageusement, le verrou est mobile en translation selon la direction longitudinale et la paroi de blocage est inclinée pour former avec la direction longitudinale dans un plan de coupe vertical comprenant la direction longitudinale, un angle α supérieur à 40°.

Ainsi, l'extrémité libre génère sur la paroi de blocage et réciproquement une force comportant une composante verticale de blocage sensiblement perpendiculaire à la direction longitudinale.

De manière avantageuse, la paroi de blocage est destinée à coopérer avec une arête inférieure de l'extrémité libre de la portion recourbée de la paroi verticale dans la position fermée du verrou.

De préférence, les moyens de mise en pression comportent un ressort de compression et la poussée du ressort sur le verrou s'effectue selon la direction longitudinale lorsque le verrou est en position fermé.

Cette disposition permet d'adapter la position du verrou à l'épaisseur et à la longueur de l'extrémité libre de la portion recourbée de la paroi verticale.

Avantageusement, la poignée amovible comporte des moyens de manœuvre du verrou à genouillère, les moyens de manœuvre comportant un levier, une bielle et le ressort de compression.

Cette disposition permet d'obtenir des moyens de manœuvre du verrou très ergonomiques.

De manière avantageuse, le verrou est mobile par rapport aux organes d'appui interne, d'appui externe et d'appui supérieur qui sont les trois solidaires et fixes.

L'invention concerne également un ensemble formé par au moins un récipient de cuisson comportant une paroi latérale qui est prolongée vers le haut par une portion recourbée vers l'extérieur comportant une extrémité libre munie d'une arête supérieure et d'une arête inférieure et une poignée amovible telle que précédemment décrite.

### Brève description des figures

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
- la figure 1 illustre une vue en perspective d'une poignée amovible agencée sur un récipient de cuisson selon un mode particulier de réalisation de l'invention.
- la figure 2 illustre une vue en coupe de la poignée amovible suivant le plan de coupe vertical médian II-II de la figure 1.
- la figure 3 illustre une vue en coupe de la poignée amovible suivant le plan de coupe vertical médian II-II de la figure 1, le verrou étant en position ouverte.
- la figure 4 illustre une vue en perspective éclatée du verrou muni de l'organe saillant et de l'organe en creux de la poignée amovible illustrée sur la figure 3.
- la figure 5 illustre une vue de détail D de l'extrémité libre de l'organe saillant dans la position de blocage dans l'organe en creux et de la poignée amovible illustrée sur la figure 1.
- Seuls les éléments nécessaires à la compréhension de l'invention ont été représentés. Pour faciliter la lecture des dessins, les mêmes éléments portent les mêmes références d'une figure à l'autre.

On notera que dans ce document, les termes "horizontal", "vertical", "inférieur", "supérieur", "haut", "bas", "avant", "arrière", "longitudinal", "transversal", employés pour décrire la poignée amovible et le récipient de cuisson font référence à cette poignée amovible en situation d'usage, lorsqu'elle est montée sur une paroi latérale du récipient de cuisson, lequel est posé sur un plan horizontal.

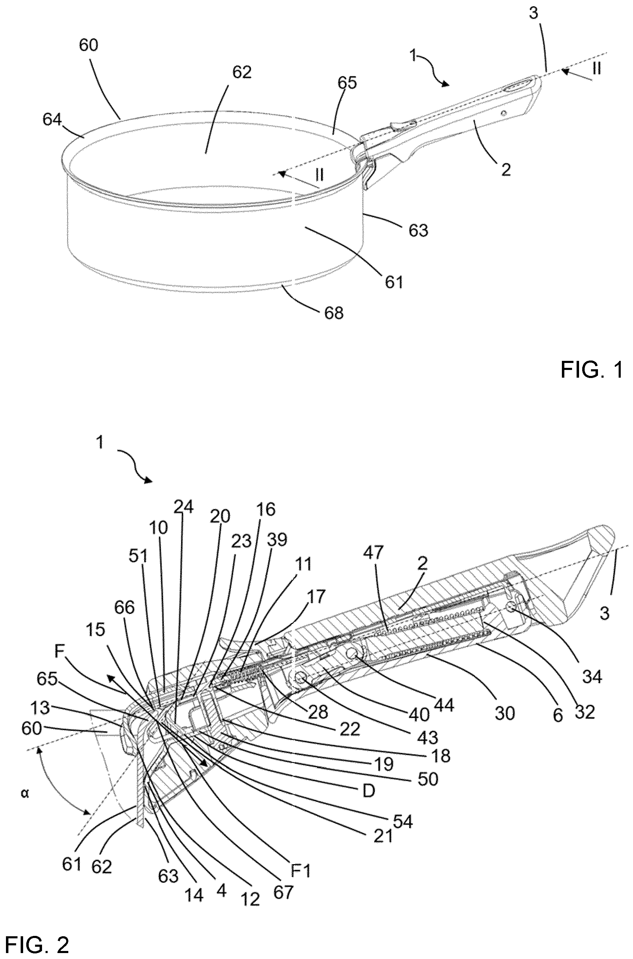

Tel que visible aux figures 1 à 3, une poignée amovible 1 est destinée à coopérer avec un récipient de cuisson 60 qui comprend une paroi de fond 68 horizontale, une paroi latérale 61 se dressant depuis la paroi de fond 68, et une portion recourbée 64 qui s'étend vers l'extérieur. La paroi latérale 61 comporte une surface intérieure 62 et une surface extérieure 63. La portion recourbée 64 prolonge la paroi latérale 61 et délimite l'ouverture supérieure du récipient de cuisson 60. La portion recourbée 64 comprend une extrémité libre 65 munie d'une arête supérieure 66 et d'une arête inférieure 67. Les arêtes supérieure 66 et inférieure 67 sont de préférence superposées dans un plan vertical.

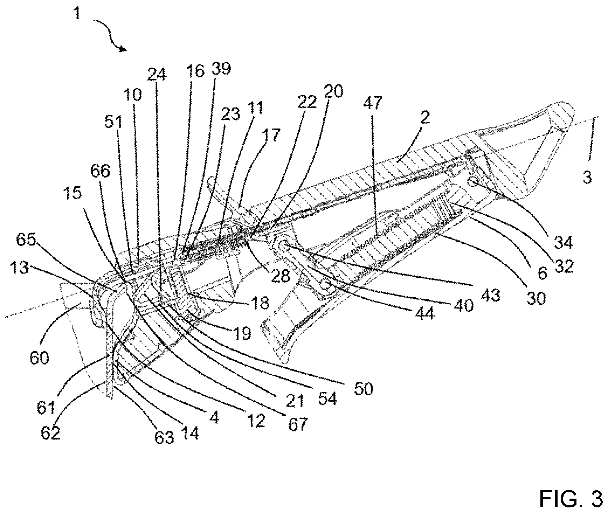

La poignée amovible 1 s'étend selon une direction longitudinale 3. La poignée amovible 1 comporte un corps de préhension 2 qui comprend à une extrémité avant dirigée vers le récipient de cuisson 60 une paroi avant 4 formant un organe d'appui externe 14 destiné à coopérer avec la surface extérieure 63 de la paroi latérale 61. Dans un plan de coupe vertical passant par la direction longitudinale 3 (Fig. 2 et 3), l'organe d'appui externe 14 est sensiblement vertical. La poignée amovible 1 comporte un plan médian vertical qui comprend la direction longitudinale 3 et qui forme un plan de symétrie pour la poignée amovible 1.

La poignée amovible 1 comporte une pièce de structure 10 qui est réalisée en matériau métallique. La pièce de structure 10 est sensiblement plane et comporte une patte d'extrémité 13. La patte d'extrémité 13 s'étend vers le bas et comporte une paroi interne formant un organe d'appui interne 12 destiné à coopérer avec la surface intérieure 62 de la paroi latérale 61. La pièce de structure 10 comprend deux portions 51 agencées de part et d'autre du plan médian vertical. Les deux portions 51 forment un organe d'appui supérieur 15 destinée à coopérer avec l'arête supérieure 66 de l'extrémité libre 65. Les deux portions 51 s'étendent le long de la direction longitudinale 3, au niveau de l'extrémité avant du corps de préhension 2.

L'organe d'appui interne 12 et l'organe d'appui externe 14 sont décalées selon la direction longitudinale 3 (Fig.3) pour permettre l'introduction de la paroi latérale 61 et de l'extrémité libre 65 lors de l'assemblage de la poignée amovible 1 sur le récipient de cuisson 60.

La poignée amovible 1 comporte un organe de verrouillage formé par un verrou 20 mobile en translation selon la direction longitudinale 3 entre une position ouverte (Fig.3) et une position fermée (Fig.2). Le verrou 20 comporte une portion centrale 22 sensiblement plane qui s'étend selon la direction longitudinale 3. Le verrou 20 est monté coulissant sous la pièce de structure 10 par le pliage de deux pattes latérales de la pièce de structure 10. La pièce de structure 10 comporte un pion 16 de section carrée qui s'étend vers le bas. La portion centrale 22 du verrou 20 comporte un logement 23 qui s'étend le long de l'axe longitudinal 3. Le logement 23 reçoit le pion 16 pour guider en translation le verrou 20. Le verrou 20 comporte à une extrémité avant une paroi de blocage 21.

Tel que visible à la figure 3, dans la position ouverte du verrou 20, la paroi de blocage 21 est destinée à être éloignée de l'organe d'appui supérieur 15 pour permettre l'introduction de la paroi latérale 61 entre les organes d'appui interne 12 et externe 14 et permettre à l'arête supérieure 66 de l'extrémité libre 65 de venir contre l'organe d'appui supérieur 15.

Tel que visible à la figure 2, dans la position fermée du verrou 20, la paroi de blocage 21 est destinée à prendre appui contre l'arête inférieure 67 de l'extrémité libre 65 et ainsi bloquer l'arête supérieure 66 contre l'organe d'appui supérieur 15. Dans un plan de coupe vertical passant par la direction longitudinale 3, une droite appartenant à la paroi de blocage 21 et la direction longitudinale forment un angle α compris entre 40 et 50°, de préférence 45°.

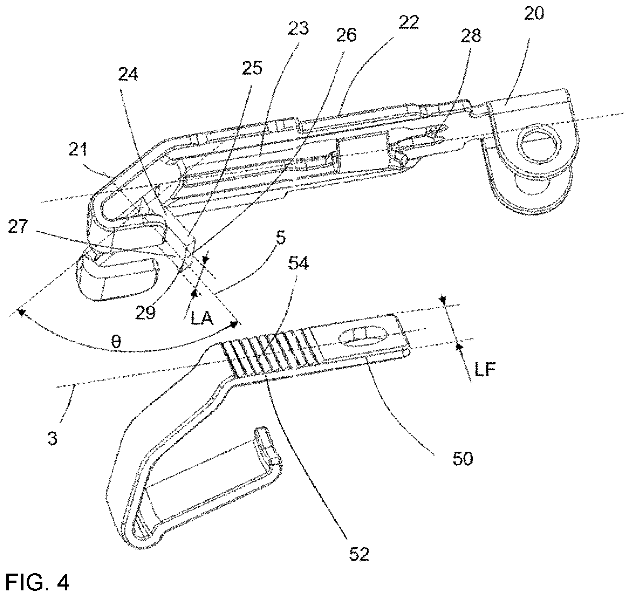

Conformément aux figures 2 à 5, le verrou 20 comporte un organe saillant 24 qui s'étend transversalement vers le bas sous la paroi de blocage 21. L'organe saillant 24 s'étend sous la paroi de blocage 21 selon une direction d'extension 5 (Fig. 4) qui est perpendiculaire à la paroi de blocage 21. Ainsi la direction d'extension 5 de l'organe saillant 24 forme avec la paroi de blocage 21 un angle θ égal à 90° dans un plan vertical passant par la direction longitudinale 3. L'organe saillant 24 prend la forme d'une patte qui s'étend le long de la direction d'extension 5 et qui présente une section transversale à la direction d'extension 5 rectangulaire. L'organe saillant 24 comporte une extrémité libre 25 qui présente une face plane rectangulaire 26 sensiblement parallèle à la paroi de blocage 21. L'extrémité libre 25 comporte une face avant 27 qui forme avec la face plane rectangulaire 26 une arête inférieure 29. L'arête inférieure 29 s'étend perpendiculairement au plan vertical passant par la direction longitudinale 3. L'arête inférieure 29 s'étend perpendiculairement au plan vertical passant par la direction longitudinale 3 sur une largeur LA égale à 10 millimètres. L'organe saillant 24 est solidaire du verrou 20 et se déplace avec lui entre la position ouverte et la position fermée et réciproquement.

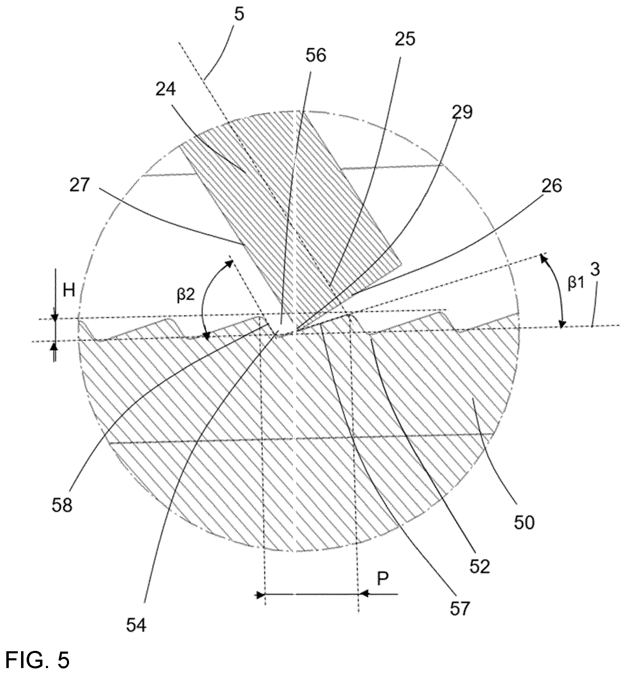

La poignée amovible 1 comporte une pièce de renfort 50 qui est fixée sur le corps de préhension 2 et qui également fixée sur une extrémité libre 18 du pion 16 par une vis 19. Ainsi, la pièce de renfort 50 est reliée de manière rigide à la pièce de structure 10. La pièce de renfort 50 est réalisée à partir d'une bande de métal et présente une section transversale rectangulaire. La pièce de renfort 50 comporte une partie crantée 52 (Fig. 4 et 5) qui s'étend le long de l'axe longitudinal 3, sous l'organe saillant 24. La partie crantée 52 comporte une succession d'organe en creux 54, tous identiques. La succession d'organe en creux 54 présente un pas P (Fig. 5) entre deux organes en creux 54 successifs égal à 1 millimètre. Chaque organe en creux 54 présente une hauteur H égale à 0,25 millimètre. L'organe en creux 54 comporte un logement de réception 56 de l'extrémité libre 25 de l'organe saillant 24. Dans un plan vertical passant par la direction longitudinale 3, le logement de réception 56 présente une forme en V munie d'une première face plane 57 inclinée d'un angle β1 par rapport à la direction longitudinale 3. L'angle β1 est égal à 20°. La forme en V est munie d'une deuxième face plane 58 inclinée d'un angle β2 égal à 60° par rapport à la direction longitudinale 3. Les première 57 et deuxième 58 faces planes et l'arête inférieure 29 s'étendent perpendiculairement au plan vertical passant par la direction longitudinale 3. La première face plane 57 s'étend perpendiculairement au plan vertical passant par la direction longitudinale 3 sur une largeur LF égale à 10 millimètres.

L'arête inférieure 29 de l'extrémité libre 25 de l'organe saillant 24 coopère avec une première face plane 57 d'un logement de réception 56 d'un organe en creux 54 lorsque le verrou 20 passe dans la position fermée. L'extrémité libre 25 de l'organe saillant 24 est mobile entre une position de blocage (Fig. 5) dans laquelle l'arête inférieure 29 vient en appui sur la première face plane 57 pour empêcher le verrou 20 de reculer et une position de déblocage dans laquelle l'arête inférieure 29 est éloignée de la première face plane 57 pour permettre au verrou 20 de reculer.

Dans la position fermée du verrou 20, l'organe saillant 24 et l'organe en creux 54 sont engagés l'un dans l'autre dans la position de blocage pour empêcher le recul du verrou 20 lorsque l'extrémité libre 65 génère sur la paroi de blocage 21 une force comportant une composante F1 verticale, orienté vers le bas et dont l'intensité est supérieure à une valeur prédéterminée égale à 2,5 N. La portion centrale 22 du verrou 20 est guidée en translation avec un jeu vertical dimensionné pour permettre à l'organe saillant 24 de se déplacer de la position de déblocage à la position de blocage dans l'organe en creux 54 ou réciproquement.

Tel que visible aux figures 2 à 4, la poignée amovible 1 comporte un moyen de rappel du verrou 20 disposé entre une patte 39 portée par la pièce de structure 10 et une butée 28 portée par le verrou 20. Le moyen de rappel est formé par un ressort 11 qui travaille en compression lorsque le verrou 20 est en position fermée et qui est adapté à appliquer une force de rappel sur la butée 28 pour entraîner le verrou 20 vers sa position ouverte.

Conformément aux figures 2 et 3, La poignée amovible 1 comporte des moyens de déplacement de l'organe de verrouillage formés par le verrou 20. Les moyens de déplacement comportent un levier 30 qui est monté pivotant sur le corps de préhension 2 selon un axe de pivotement 34 s'étendant selon une direction transversale, perpendiculaire à la direction longitudinale 3, et une bielle 40 qui permet le déplacement du verrou 20 quand le levier 30 est pivoté. La bielle 40 est montée de façon pivotante, par une première extrémité au verrou 20 selon un axe 43, et par une seconde extrémité au levier 30 selon un axe 44 qui est monté coulissant dans une ouverture oblongue réalisée dans le levier 30.

Le levier 30 est disposé sur une face inférieure 6 du corps de préhension 2 et est mobile entre une position de fermeture (Fig. 2) et une position d'ouverture (Fig. 3) en passant par une position intermédiaire d'équilibre instable. Dans la position de fermeture du levier 30, le verrou 20 est en position fermée et dans la position d'ouverture du levier 30, le verrou 20 est dans la position ouverte. En outre, les moyens de déplacement comprennent également un ressort 47 qui est disposé entre l'axe 44 monté coulissant et une paroi transversale 32 du levier 30. Ce ressort 47 de compression permet un ajustement de la position du verrou 20 en position fermée à l'épaisseur de la paroi latérale 61 du récipient de cuisson 60.

Conformément à la figure 2, dans la position de fermeture du levier 30, l'axe 44 autour duquel la seconde extrémité 42 pivote est situé au-dessus d'une ligne passant par l'axe de pivotement 34 et l'axe 43. La seconde extrémité 42 est maintenue en contact de la pièce de structure 10 sous l'action du ressort 47 de compression. Ainsi, le verrou 20 reste naturellement dans sa position fermée, sans que l'utilisateur ait à maintenir un quelconque effort sur la poignée amovible 1. La position intermédiaire d'équilibre instable du levier 30 est atteinte lorsque l'axe 44 autour duquel la seconde extrémité 42 pivote, est déplacé sous la ligne passant par l'axe de pivotement 34 et l'axe 43.

Tel que visible sur les figures 1 à 3, la poignée amovible 1 comprend un bouton d'ouverture 17 qui permet de faire passer le levier 30 initialement dans sa position de fermeture au-delà de sa position intermédiaire d'équilibre instable. Le bouton d'ouverture 17 est agencé sur une face supérieure du corps de préhension 2. Le bouton d'ouverture 17 est mobile en rotation autour d'un axe transversal, horizontal à la direction longitudinale 3 de la poignée amovible 1. Le bouton d'ouverture 17 est mobile entre une position abaissée de repos dans laquelle le levier 30 est dans sa position de fermeture, une position relevée intermédiaire dans laquelle le levier est dans sa position intermédiaire d'équilibre instable et une position relevée dans laquelle le levier 30 est dans sa position d'ouverture.

En fonctionnement, pour désassembler la poignée amovible 1 du récipient de cuisson 60, l'utilisateur saisit le corps de préhension 2 et fait pivoter avec le pouce le bouton d'ouverture 17 de la position abaissée de repos dans laquelle le levier 30 est dans sa position de fermeture à la position relevée dans laquelle le levier 30 est dans sa position d'ouverture. Le passage du levier 30 de sa position de fermeture à sa position d'ouverture provoque une réduction de l'effort exercé par le ressort 47 de compression sur la paroi de blocage 21 contre l'extrémité libre 65 de la portion recourbée 64. L'arête inférieure 29 peut alors se séparer de la première face plane 57 pour sortir du logement de réception 56 et le verrou 20 peut passer de sa position fermée à sa position ouverte.

Pour assembler la poignée amovible 1 sur le récipient de cuisson 60, l'utilisateur saisit le corps de préhension 2 et suivant le même mode opératoire que celui décrit ci-dessus amène le verrou 20 dans sa position ouverte. Il introduit l'extrémité libre 65 de la portion recourbée 64 entre l'organe d'appui interne 12 et l'organe d'appui externe 14 pour amener la surface intérieure 62 de la paroi latérale 61 contre l'organe d'appui interne 12 et la surface extérieure 63 contre l'organe d'appui externe 14, et également amener l'arête supérieure 66 contre les deux portions 51. Ensuite, il appuie sur le levier 30 pour le faire passer de sa position d'ouverture à sa position de fermeture et ainsi entrainer le verrou 20 de sa position ouverte vers sa position fermée. La paroi de blocage 21 sous l'action du ressort 47 de compression prend alors appui contre l'arête inférieure 67 de l'extrémité libre 65 et ainsi bloque l'arête supérieure 66 contre les deux portions 51. L'extrémité libre 65 de la portion recourbée 64 génère alors sur la paroi de blocage 21 une force qui comporte une composante F1 opposée à la composante verticale F de blocage, orientée vers le bas, qui déplace la paroi de blocage 21 vers le bas. Ainsi, l'arête inférieure 29 de l'extrémité libre 25 de l'organe saillant 24 est engagée dans un logement de réception 56 de l'organe en creux 54 pour venir en appui sur la première face plane 57 et le verrou 20 passe dans la position fermée. Lorsque l'utilisateur veut retourner les aliments contenus dans le récipient de cuisson 60, par exemple pour retourner des crêpes, et qu'il imprime avec la poignée amovible 1 sur le récipient de cuisson 60 un mouvement du bas vers le haut en freinant énergiquement le mouvement en fin de course, l'extrémité libre 65 de la portion recourbée 64 exerce sur la paroi de blocage 21 un effort important. Mais l'arête inférieure 29 qui est en appui sur la première face plane 57, dans logement de réception 56 empêche le verrou 20 de reculer.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention définie par les revendications ci-jointes.

Ainsi, dans une variante de réalisation non illustrée, la paroi de blocage 21 comporte une extrémité avant et l'organe saillant 24 s'étend transversalement sous l'extrémité avant.

### Possibilité d'application industrielle

L'invention trouve son application industrielle dans la conception, la fabrication ou l'utilisation de poignées amovibles pour récipients de cuisson.

## Revendications

1. Poignée amovible (1) destinée à coopérer avec un récipient de cuisson (60) ayant une paroi latérale (61) qui est prolongée vers le haut par une portion recourbée (64) vers l'extérieur comportant une extrémité libre (65), ladite poignée amovible (1) s'étendant selon une direction longitudinale (3) et comprenant un organe d'appui interne (12) et un organe d'appui externe (14) destiné à venir contre, respectivement, une surface intérieure (62) et une surface extérieure (63) de la paroi latérale (61), ainsi qu'un organe d'appui supérieur (15) destinés à venir contre l'extrémité libre (65) de la portion recourbée (64), ladite poignée amovible (1) comprenant un verrou (20) mobile en translation entre une position ouverte et une position fermée, le verrou (20) comportant une paroi de blocage (21) destinée à être éloignée de l'organe d'appui interne (12) dans la position ouverte du verrou et destinée à générer une force sur l'extrémité libre (65) dans la position fermée du verrou (20), sous l'action d'un moyen de mise en pression (47), le verrou (20) comportant un organe saillant (24) et ladite poignée amovible (1) comportant un organe en creux (54) fixe et dans la position fermée, l'organe saillant (24) et l'organe en creux (54) étant engagés l'un dans l'autre pour empêcher le recul du verrou (20), **caractérisée en ce que** l'organe saillant (24) s'étend transversalement sous la paroi de blocage (21) et **en ce que** l'organe saillant (24) comporte une extrémité libre (25) qui coopère avec l'organe en creux (54), l'extrémité libre (25) de l'organe saillant (24) étant mobile entre une position de blocage dans laquelle le verrou (20) ne peut reculer et une position de déblocage dans laquelle le verrou (20) peut reculer.

2. Poignée amovible (1) selon la revendication 1, **caractérisée en ce que** l'organe en creux (54) présente une hauteur H inférieure à 0,5 millimètre.

3. Poignée amovible (1) selon l'une quelconque des revendications 1 à 2, **caractérisée en ce que** l'organe saillant (24) s'étend sous la paroi de bocage (21) du verrou (20) selon une direction d'extension (5), la direction d'extension (5) et la paroi de blocage (21) formant un angle θ compris entre 60° et 120° dans un plan vertical passant par la direction longitudinale (3).

4. Poignée amovible (1) selon la revendication 3, **caractérisée en ce que** la direction d'extension (5) de l'organe saillant (24) et la paroi de blocage (21) du verrou forme un angle θ égal à 90° dans un plan vertical passant par la direction longitudinale (3).

5. Poignée amovible (1) selon l'une quelconque des revendications 1 à 4, **caractérisée en ce que** l'organe en creux (54) comporte au moins un logement de réception (56) de l'extrémité libre (25) de l'organe saillant (24).

6. Poignée amovible (1) selon la revendication 5, **caractérisée en ce que**, dans un plan vertical passant par la direction longitudinale (3), l'au moins un logement de réception (56) présente une forme en V munie d'une première face plane (57) inclinée d'un angle β par rapport à la direction longitudinale (3), l'angle β étant inférieur à 25° et **en ce que** l'extrémité libre (25) de l'organe saillant (24) comporte une arête inférieure (29) qui coopère avec la première face plane (57) dans la position de blocage.

7. Poignée amovible (1) selon l'une quelconque des revendications 5 à 6, **caractérisée en ce que** la première face plane (57) et l'arête inférieure (29) s'étendent perpendiculairement au plan vertical passant par la direction longitudinale (3).

8. Poignée amovible (1) selon la revendication 7, **caractérisée en ce que** la première face plane (57) s'étend perpendiculairement au plan vertical passant par la direction longitudinale (3) sur une largeur LF et **en ce que** l'arête inférieure (29) s'étend perpendiculairement au plan vertical passant par la direction longitudinale (3) sur une largeur LA, LF et/ou LA étant supérieur à 5 millimètres.

9. Poignée amovible (1) selon l'une quelconque des revendications 5 à 8, **caractérisée en ce que** l'organe en creux (54) comporte une pluralité de logements de réception (56) agencés le long de la direction longitudinale (3) et qui présente un pas P entre deux logements de réception (56) successifs, le pas P étant inférieur à 1,5 millimètres.

10. Poignée amovible (1) selon l'une quelconque des revendications 1 à 9, **caractérisée en ce que** le verrou (20) est mobile en translation selon la direction longitudinale (3) et **en ce que** la paroi de blocage (21) est inclinée pour former avec la direction longitudinale (3) dans un plan de coupe vertical comprenant la direction longitudinale (3), un angle α supérieur à 40°.

11. Poignée amovible (1) selon l'une quelconque des revendications 1 à 10, **caractérisée en ce que** les moyens de mise en pression comportent un ressort (47) de compression et **en ce que** la poussée du ressort (47) sur le verrou (20) s'effectue selon la direction longitudinale (3) lorsque le verrou (20) est en position fermé.

12. Poignée amovible (1) selon la revendication 11, **caractérisée en ce qu'**elle comporte des moyens de manœuvre du verrou (20) à genouillère, lesdits moyens de manœuvre comportant un levier (30), une bielle (40) et le ressort (47) de compression.

13. Ensemble formé par au moins un récipient de cuisson (60) comportant une paroi latérale (61) qui est prolongée vers le haut par une portion recourbée (64) vers l'extérieur comportant une extrémité libre (65) munie d'une arête supérieure (66) et d'une arête inférieure (67) et une poignée amovible (1) selon l'une quelconque des revendications 1 à 12.

## Patentansprüche

1. Abnehmbarer Griff (1), der zur Zusammenarbeit mit einem Kochgefäß (60) bestimmt ist, das eine Seitenwand (61) aufweist, die nach oben durch einen nach außen gebogenen Abschnitt (64) verlängert ist, der ein freies Ende (65) umfasst, wobei sich der abnehmbare Griff (1) in einer Längsrichtung (3) erstreckt und ein inneres Stützelement (12) und ein äußeres Stützelement (14) umfasst, die jeweils gegen eine innere Oberfläche (62) und eine äußere Oberfläche (63) der Seitenwand (61) anliegen sollen, sowie ein oberes Stützelement (15), das gegen das freie Ende (65) des gebogenen Abschnitts (64) anliegt; der abnehmbare Griff (1) umfasst einen beweglichen Verriegelungsmittel (20), der zwischen einer offenen und einer geschlossenen Position in der Übersetzung bewegt wird, wobei der Verriegelungsmittel (20) eine Sperrwand (21) umfasst, die in der offenen Position des Verriegelungsmittel vom inneren Stützelement (12) entfernt ist und in der geschlossenen Position des Verriegelungsmittel (20) eine Kraft auf das freie Ende (65) ausübt, unter der Wirkung eines Druckmittels (47), wobei der Verriegelungsmittel (20) ein hervorstehendes Element (24) umfasst und der abnehmbare Griff (1) ein festes Vertiefungselement (54) umfasst, und in der geschlossenen Position sind das hervorstehende Element (24) und das Vertiefungselement (54) ineinander eingreift, um das Zurückbewegen des Verriegelungsmittel (20) zu verhindern, wobei das hervorstehende Element (24) sich unter der Sperrwand (21) transversal erstreckt und das hervorstehende Element (24) ein freies Ende (25) umfasst, das mit dem Vertiefungselement (54) zusammenarbeitet, wobei das freie Ende (25) des hervorstehenden Elements (24) zwischen einer Sperrposition, in der der Verriegelungsmittel (20) nicht zurückbewegt werden kann, und einer Freigabeposition, in der der Verriegelungsmittel (20) zurückbewegt werden kann, beweglich ist.

2. Abnehmbarer Griff (1) gemäß Patentanspruch 1, **dadurch gekennzeichnet, dass** das Vertiefungselement (54) eine Höhe H von weniger als 0,5 Millimeter aufweist.

3. Abnehmbarer Griff (1) gemäß einem der Patentansprüche 1 bis 2, **dadurch gekennzeichnet, dass** sich das hervorstehende Element (24) unter der Sperrwand (21) des Verriegelungsmittels (20) in einer Erstreckungsrichtung (5) erstreckt, wobei die Erstreckungsrichtung (5) und die Sperrwand (21) einen Winkel θ bilden, der zwischen 60° und 120° liegt, in einer vertikalen Ebene durch die Längsrichtung (3).

4. Abnehmbarer Griff (1) gemäß Patentanspruch 3, **dadurch gekennzeichnet, dass** die Erstreckungsrichtung (5) des hervorstehenden Elements (24) und die Sperrwand (21) des Verriegelungsmittels einen Winkel θ von 90° in einer vertikalen Ebene durch die Längsrichtung (3) bildet.

5. Abnehmbarer Griff (1) gemäß einem der Patentansprüche 1 bis 4, **dadurch gekennzeichnet, dass** das Vertiefungselement (54) mindestens eine Empfangsvertiefung (56) für das freie Ende (25) des hervorstehenden Elements (24) umfasst.

6. Abnehmbarer Griff (1) gemäß Patentanspruch 5, **dadurch gekennzeichnet, dass**, in einer vertikalen Ebene durch die Längsrichtung (3), die mindestens eine Empfangsvertiefung (56) eine V-Form mit einer ersten flachen Fläche (57) aufweist, die gegenüber der Längsrichtung (3) geneigt ist, wobei der Winkel β weniger als 25° beträgt, und dass das freie Ende (25) des hervorstehenden Elements (24) eine untere Kante (29) umfasst, die mit der ersten flachen Fläche (57) in der Sperrposition zusammenarbeitet.

7. Abnehmbarer Griff (1) gemäß einem der Patentansprüche 5 bis 6, **dadurch gekennzeichnet, dass** die erste flache Fläche (57) und die untere Kante (29) sich senkrecht zur vertikalen Ebene durch die Längsrichtung (3) erstrecken.

8. Abnehmbarer Griff (1) gemäß Patentanspruch 7, **dadurch gekennzeichnet, dass** sich die erste flache Fläche (57) senkrecht zur vertikalen Ebene durch die Längsrichtung (3) über eine Breite LF erstreckt und dass sich die untere Kante (29) senkrecht zur vertikalen Ebene durch die Längsrichtung (3) über eine Breite LA erstreckt, wobei LF und/oder LA größer als 5 Millimeter sind.

9. Abnehmbarer Griff (1) gemäß einem der Patentansprüche 5 bis 8, **dadurch gekennzeichnet, dass** das Vertiefungselement (54) eine Vielzahl von Empfangsvertiefungen (56) entlang der Längsrichtung (3) angeordnet umfasst, wobei der Abstand P zwischen zwei aufeinanderfolgenden Empfangsvertiefungen (56) weniger als 1,5 Millimeter beträgt.

10. Abnehmbarer Griff (1) gemäß einem der Patentansprüche 1 bis 9, **dadurch gekennzeichnet, dass** das Verriegelungsmittel (20) in der Übersetzung in die Längsrichtung (3) beweglich ist und dass die Sperrwand (21) geneigt ist, um mit der Längsrichtung (3) in einer vertikalen Schnittfläche, die die Längsrichtung (3) umfasst, einen Winkel α von mehr als 40° zu bilden.

11. Abnehmbarer Griff (1) gemäß einem der Patentansprüche 1 bis 10, **dadurch gekennzeichnet, dass** die Druckmittel eine Druckfeder (47) umfassen und dass der Druck der Feder (47) auf das Verriegelungsmittel (20) in der Längsrichtung (3) erfolgt, wenn das Verriegelungsmittel (20) sich in der geschlossenen Position befindet.

12. Abnehmbarer Griff (1) gemäß Patentanspruch 11, **dadurch gekennzeichnet, dass** er Kniehebel-Betätigungsmittel des Verriegelungsmittels (20) umfasst, wobei die Betätigungsmittel einen Hebel (30), eine Pleuelstange (40) und die Druckfeder (47) umfassen.

13. Baugruppe, bestehend aus mindestens einem Kochgefäß (60), das eine Seitenwand (61) aufweist, die nach oben durch einen nach außen gebogenen Abschnitt (64) mit einer oberen Kante (66) und einer unteren Kante (67) verlängert ist, und einem abnehmbaren Griff (1) gemäß einem der Patentansprüche 1 bis 12.

## Claims

1. Removable handle (1) intended to cooperate with a cooking vessel (60) having a side wall (61) which is extended upwards by a portion (64) curved outwards comprising a free end (65), said removable handle (1) extending in a longitudinal direction (3) and comprising an internal support member (12) and an external support member (14) intended to come against, respectively, an interior surface (62) and an exterior surface (63) of the side wall (61), as well as an upper support member (15) intended to come against the free end (65) of the curved portion (64), said removable handle (1) comprising a lock (20) movable in translation between an open position and a closed position, the lock (20) comprising a blocking wall (21) intended to be spaced from the internal support member (12) in the open position of the lock and intended to exert a force on the free end (65) in the closed position of the lock (20), under the action of a pressure means (47), the lock (20) comprising a projecting member (24) and said removable handle (1) comprising a fixed recessed member (54) and in the closed position, the projecting member (24) and the recessed member (54) being engaged with one another to prevent the back movement of the lock (20), **characterized in that** the projecting member (24) extends transversely beneath the blocking wall (21) and **in that** the projecting member (24) comprises a free end (25) which cooperates with the recessed member (54), the free end (25) of the projecting member (24) being movable between a locked position in which the lock (20) cannot retract and an unlocked position in which the lock (20) can retract.

2. Removable handle (1) according to claim 1, **characterized in that** the recessed member (54) has a height H less than 0.5 millimeters.

3. Removable handle (1) according to any one of claims 1 to 2, **characterized in that** the projecting member (24) extends beneath the blocking wall (21) of the lock (20) along an extension direction (5), the extension direction (5) and the blocking wall (21) forming an angle θ between 60° and 120° in a vertical plane passing through the longitudinal direction (3).

4. Removable handle (1) according to claim 3, **characterized in that** the extension direction (5) of the projecting member (24) and the blocking wall (21) of the lock form an angle θ equal to 90° in a vertical plane passing through the longitudinal direction (3).

5. Removable handle (1) according to any one of claims 1 to 4, **characterized in that** the recessed member (54) comprises at least one receiving cavity (56) for the free end (25) of the projecting member (24).

6. Removable handle (1) according to claim 5, **characterized in that**, in a vertical plane passing through the longitudinal direction (3), the at least one receiving cavity (56) has a V-shape provided with a first flat face (57) inclined at an angle β relative to the longitudinal direction (3), the angle β being less than 25°, and **in that** the free end (25) of the projecting member (24) comprises a lower edge (29) which cooperates with the first flat face (57) in the locked position.

7. Removable handle (1) according to any one of claims 5 to 6, **characterized in that** the first flat face (57) and the lower edge (29) extend perpendicularly to the vertical plane passing through the longitudinal direction (3).

8. Removable handle (1) according to claim 7, **characterized in that** the first flat face (57) extends perpendicularly to the vertical plane passing through the longitudinal direction (3) over a width LF, and **in that** the lower edge (29) extends perpendicularly to the vertical plane passing through the longitudinal direction (3) over a width LA, LF and/or LA being greater than 5 millimeters.

9. Removable handle (1) according to any one of claims 5 to 8, **characterized in that** the recessed member (54) comprises a plurality of receiving cavities (56) arranged along the longitudinal direction (3) and having a pitch P between two successive receiving cavities (56), the pitch P being less than 1.5 millimeters.

10. Removable handle (1) according to any one of claims 1 to 9, **characterized in that** the lock (20) is movable in translation along the longitudinal direction (3) and **in that** the blocking wall (21) is inclined to form, with the longitudinal direction (3) in a vertical sectional plane comprising the longitudinal direction (3), an angle α greater than 40°.

11. Removable handle (1) according to any one of claims 1 to 10, **characterized in that** the pressure means comprise a compression spring (47) and **in that** the thrust of the spring (47) on the lock (20) occurs along the longitudinal direction (3) when the lock (20) is in the closed position.

12. Removable handle (1) according to claim 11, **characterized in that** it comprises toggle operation means for the lock (20), said operation means comprising a lever (30), a connecting rod (40), and the compression spring (47).

13. Assembly composed of at least one cooking vessel (60) having a side wall (61) which is extended upwards by a portion (64) curved outwards comprising a free end (65) provided with an upper edge (66) and a lower edge (67), and a removable handle (1) according to any one of claims 1 to 12.
